(19)

**Europäisches Patentamt**
**European Patent Office**
**Office européen des brevets**

(11) **EP 4 722 943 A1**

(12) **EUROPEAN PATENT APPLICATION**

(43) Date of publication:
08.04.2026 Bulletin 2026/15

(51) International Patent Classification (IPC):
*G06F 16/3329* (2025.01)

(21) Application number: 24219590.7

(22) Date of filing: 12.12.2024

(52) Cooperative Patent Classification (CPC):
G06F 16/33295

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.10.2024 US 202418905542

(71) Applicant: **Red Hat, LLC**
**Raleigh, NC 27601 (US)**

(72) Inventors:
• **LUTI, Anna**
**Raleigh, 27601 (US)**
• **ANTINORI, Paolo**
**Raleigh, 27601 (US)**

(74) Representative: **Murgitroyd & Company**
**165-169 Scotland Street**
**Glasgow G5 8PL (GB)**

(54) **AUTHORITY-BASED TRAINING PROCESS FOR A LARGE LANGUAGE MODEL**

(57)    An authority-based training process for a large language model is provided. The process can involve generating corresponding sets of data quality metrics for each sample in a training dataset. The training dataset can encompass a group of topics. The process can also involve generating a corresponding set of authority scores for each sample based on the corresponding sets of data quality metrics. Each authority score can indicate a respective authority level of the sample in relation to a particular topic of the group of topics. The process can further involve training the large language model using a loss function that includes a set of weights. During training, the set of weights can be dynamically adjusted based on the corresponding set of authority scores for each sample in the training dataset. This can produce a large language model that is more accurate than may otherwise be possible.

FIG. 1

**Description**

**TECHNICAL FIELD**

The present disclosure relates generally to training large language models. More specifically, but not by way of limitation, this disclosure relates to an authority-based training process for large language models that improves the accuracy and credibility of responses from such models.

**BACKGROUND**

Large language models (LLMs) have recently grown in popularity. LLMs are machine-learning models that can process natural language inputs and provide natural language outputs. LLMs can understand and generate human language with remarkable accuracy. Utilizing Natural Language Processing (NLP) techniques, LLMs can analyze and interpret text to discern the meaning, sentiment, and context of sentences. These models can generate coherent and contextually relevant responses, making them useful for a variety of applications.

One type of an LLM is a generative pre-trained transformer (GPT) model, though other kinds of LLMs exist. A popular GPT model is GPT-4, which is produced by OpenAI® of San Francisco, California. GPT models and other types of LLMs are often integrated into chatbots, with which a user can interact to engage in conversations about various topics.

**SUMMARY**

According to a first aspect of the disclosure, there is provided a system comprising one or more processors, and one or more memories storing program code that is executable by the one or more processors for causing the one or more processors to perform operations including: for each sample in a training dataset for training a large language model, generating corresponding sets of data quality metrics, wherein the training dataset encompasses a plurality of topics; for each sample in the training dataset, generating a corresponding set of authority scores based on the corresponding sets of data quality metrics for the sample, each authority score in the corresponding set of authority scores indicating a respective authority level of the sample in relation to a particular topic of the plurality of topics; and executing a training process in which the large language model is trained using a loss function that includes a set of weights, wherein the training process involves dynamically adjusting the set of weights based on the corresponding set of authority scores for each sample in the training dataset.

The operation of dynamically adjusting the set of weights may cause more importance to be given to higher authority data in the training dataset with respect to each topic of the plurality of topics than to lower authority data in the training dataset with respect to each topic of the plurality of topics.

The corresponding set of authority scores, for each sample in the training dataset, may include normalized scores generated using a predefined normalization technique.

Each set of data quality metrics in the corresponding sets of data quality metrics for a given sample may correspond to a respective topic of the plurality of topics and includes one or more of: a reference count metric, a maturity metric, and a sentiment metric.

The operations may further comprise, after the training process is complete: executing a topic model on a query from a user to automatically determine one or more topics present in the query; generating an input prompt based on the query and the one or more topics; providing the input prompt as input to the large language model, the large language model being configured to generate an output based on the input prompt; and providing the output to the user as a response to the query.

The operations may further comprise, after the training process is complete: detecting an event; and in response to detecting the event: for each sample of the training dataset, updating the corresponding set of authority scores to thereby generate an updated set of authority scores for the sample; and retraining the large language model based on the updated sets of authority scores for the samples in the training dataset.

The operations may further comprise, for each sample of the training dataset: generating updated sets of data quality metrics corresponding to the plurality of topics; and updating the corresponding set of authority scores based on the updated sets of data quality metrics to thereby generate the updated set of authority scores for the sample.

The operations may further comprise: automatically deriving the plurality of topics from the training dataset by executing a topic model on the training dataset; and after automatically deriving the plurality of topics from the training dataset, generating the corresponding set of authority scores for each sample in the training dataset based on the plurality of topics.

According to a second aspect of the disclosure, there is provided a computer-implemented method comprising: for each sample in a training dataset for training a large language model, generating corresponding sets of data quality metrics, wherein the training dataset encompasses a plurality of topics; for each sample in the training dataset, generating a corresponding set of authority scores based on the corresponding sets of data quality metrics for the sample, each authority score in the corresponding set of authority scores indicating a respective authority level of the sample in relation to a particular topic of the plurality of topics; and executing a training process in which the large language model is trained using a loss function that includes a set of weights, wherein the training process involves dynamically adjusting the set of weights based on the corresponding set of authority scores for each sample in the training dataset.

The operation of dynamically adjusting the set of weights may cause more importance to be given to higher authority data in the training dataset with respect to each topic of the plurality of topics than to lower authority data in the training dataset with respect to each topic of the plurality of topics.

The corresponding set of authority scores, for each sample in the training dataset, may include normalized scores generated using a predefined normalization technique.

Each set of data quality metrics in the corresponding sets of data quality metrics for a given sample may correspond to a respective topic of the plurality of topics and includes one or more of: a reference count metric, a maturity metric, and a sentiment metric.

The method may further comprise, after the training process is complete: executing a topic model on a query from a user to automatically determine one or more topics present in the query; generating an input prompt based on the query and the one or more topics; providing the input prompt as input to the large language model, the large language model being configured to generate an output based on the input prompt; and providing the output to the user as a response to the query.

The method may further comprise, after the training process is complete: detecting an event; and in response to detecting the event: for each sample of the training dataset, updating the corresponding set of authority scores to thereby generate an updated set of authority scores for the sample; and retraining the large language model based on the updated sets of authority scores for the samples in the training dataset.

The method may further comprise: for each sample of the training dataset: generating an additional data quality metric; for each sample of the training dataset, updating the corresponding set of authority scores based on the additional data quality metric to thereby generate an updated set of authority scores for the sample; and retraining the large language model based on the updated sets of authority scores for the samples in the training dataset.

The method may further comprise: automatically deriving the plurality of topics from the training dataset by executing a topic model on the training dataset; and after automatically deriving the plurality of topics from the training dataset, generating the corresponding set of authority scores for each sample in the training dataset based on the plurality of topics.

According to a third aspect of the disclosure, there is provided a non-transitory computer-readable medium comprising program code that is executable by one or more processors for causing the one or more processors to carry out the method of the first aspect. The program code may cause the one or more processors to perform operations including: for each sample in a training dataset for training a large language model, generating corresponding sets of data quality metrics, wherein the training dataset encompasses a plurality of topics; for each sample in the training dataset, generating a corresponding set of authority scores based on the corresponding sets of data quality metrics for the sample, each authority score in the corresponding set of authority scores indicating a respective authority level of the sample in relation to a particular topic of the plurality of topics; and executing a training process in which the large language model is trained using a loss function that includes a set of weights, wherein the training process involves dynamically adjusting the set of weights based on the corresponding set of authority scores for each sample in the training dataset.

The operation of dynamically adjusting the set of weights may cause more importance to be given to higher authority data in the training dataset with respect to each topic of the plurality of topics than to lower authority data in the training dataset with respect to each topic of the plurality of topics.

The corresponding set of authority scores, for each sample in the training dataset, may include normalized scores generated using a predefined normalization technique.

Each set of data quality metrics in the corresponding sets of data quality metrics for a given sample may correspond to a respective topic of the plurality of topics and includes one or more of: a reference count metric, a maturity metric, and a sentiment metric.

The operations may further comprise, after the training process is complete: executing a topic model on a query from a user to automatically determine one or more topics present in the query; generating an input prompt based on the query and the one or more topics; providing the input prompt as input to the large language model, the large language model being configured to generate an output based on the input prompt; and providing the output to the user as a response to the query.

The operations may further comprise, after the training process is complete: detecting an event; and in response to detecting the event: for each sample of the training dataset, updating the corresponding set of authority scores to thereby generate an updated set of authority scores for the sample; and retraining the large language model based on the updated sets of authority scores for the samples in the training dataset.

The operations may further comprise, for each sample of the training dataset: generating updated sets of data quality metrics corresponding to the plurality of topics; and updating the corresponding set of authority scores based on the updated sets of data quality metrics to thereby generate the updated set of authority scores for the sample.

The operations may further comprise: automatically deriving the plurality of topics from the training dataset by executing a topic model on the training dataset; and after automatically deriving the plurality of topics from the training dataset, generating the corresponding set of authority scores for each sample in the training dataset based on the plurality of topics.

## BRIEF DESCRIPTION OF THE DRAWINGS

FIG. 1 shows a block diagram of an example of a system for performing an authority-based training process for a large language model according to some aspects of the present disclosure.

FIG. 2 shows an example of sets of data quality metrics and a set of authority scores for a sample according to some aspects of the present disclosure.

FIG. 3 shows a flowchart of an example of an authority-based training process for a large language model according to some aspects of the present disclosure.

FIG. 4 shows a block diagram of an example of a system for performing an authority-based training process for a large language model according to some aspects of the present disclosure.

FIG. 5 shows a flowchart of an example of an authority-based training process for a large language model according to some aspects of the present disclosure.

FIG. 6 shows a block diagram of another example of a system for performing an authority-based training process for a large language model according to some aspects of the present disclosure.

FIG. 7 shows a flowchart of another example of an authority-based training process for a large language model according to some aspects of the present disclosure.

FIG. 8 shows a block diagram of another example of a system for performing an authority-based training process for a large language model according to some aspects of the present disclosure.

## DETAILED DESCRIPTION

Large language models (LLMs) are typically trained on a large corpus of data, including books, blog posts, social media posts, academic journals, and other texts. During the training process, these texts are normally weighted equally across all topics, even though some texts may be more credible than others for certain topics. For example, a peer-reviewed academic journal about virology will likely have more credible information about a virus than a social media post. In contrast, a real-time social media post about the current weather may be more credible than a news article from early in the morning. Because all these texts are normally weighted equally during the training process, once trained, an LLM may generate outputs that are wrong, misleading, and/or unsupported. For instance, because an LLM may derive an answer to a user's question in equal parts from conflicting blog posts, social media posts, and books, it may get concepts confused or plain wrong, or place too much emphasis on information from a source that is not sufficiently credible. This is one source of hallucinations. When an LLM hallucinates, it confidently states an incorrect answer in an authoritative way, which unwary users may rely upon. These issues are even more pronounced when the user's question pertains to a very specific topic, as there may be a relatively small amount of training data that is all equally weighted during the training process. Inaccurate answers and hallucinations are key problems with LLMs currently faced by the industry.

Some examples of the present disclosure can overcome one or more of the abovementioned problems through an improved training process for an LLM that results in more accurate answers to user questions. The training process generally involves four phases. In the first phase, training data is collected. The training data is composed of multiple individual pieces of training data (e.g., social media posts, blog posts, academic papers, etc.) that are referred to herein as samples. The training data can encompass multiple topics. In the second phase, sets of data quality metrics are computed for each sample. Each set of data quality metrics can indicate the quality of the sample with respect to one of the topics. The quality of the sample can refer to its accuracy and/or reliability with respect to a given topic. In the third phase, a set of authority scores is generated for each sample based on its sets of data quality metrics. Each authority score for a given sample can be generated based on the sample's respective set of data quality metrics for a given topic and represent an authority level of the sample with respect that topic. The sample's authority level with respect to a topic can refer to its level of credibility with respect to the topic. In the fourth phase, a training process is performed in which a large language model is trained using a loss function that includes a set of weights. During the training process, the sets of authority scores for the samples can be used as the set of weights. This causes more importance to be given to higher-authority training data with respect to each topic, and less importance to be given to lower-authority training data with respect to each topic. As a result of this training process, when a user subsequently asks a question to the trained LLM, the LLM can produce an answer that is more accurate than may otherwise be possible.

In some examples, the LLM may be retrained one or more times following the initial training process described above. For example, after the initial training process is complete, an updated set of authority scores can be generated for each sample. The updated set of authority scores may be generated in response to detecting an event. Examples of such an event may include the passage of a predefined time frame, the addition or removal of a data quality metric, the availability of a new training sample, or a user request. The LLM may then be retrained based on the updated set of authority scores, for example by using the updated set of authority scores as the set of weights for the loss function during the training process. In this way, the accuracy of the LLM can be continually improved over time.

To further improve the accuracy of the LLM, in some examples a pre-processing operation can be performed on a query from a user before the query is input into the trained LLM. The pre-processing operation can involve identifying at least one topic expressed in the query, for example by executing a topic model. Such topic models can automatically identify topics present in a text. After the topic is identified, a unique identifier of the topic can be combined with at least some of the original query to form an input prompt for the LLM. For instance, the input prompt can include the original query and the topic identifier, which can serve as additional contextual data for the LLM. By adding this additional contextual data to the input prompt, when the LLM processes the input prompt, it is more likely to activate the correct portions of the model's internal architecture to answer the user's query. As a result, it can produce a more accurate response than may otherwise be possible.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

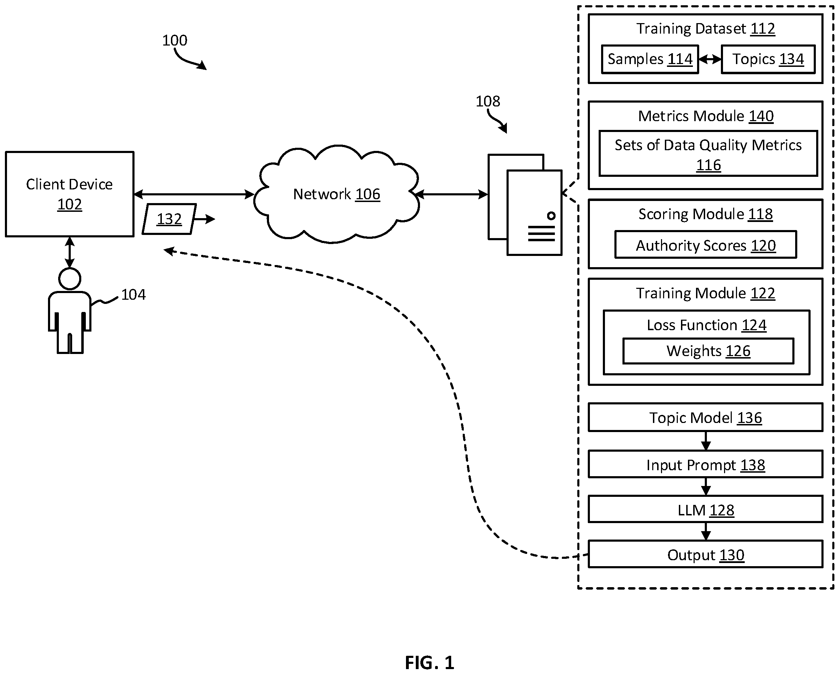

FIG. 1 shows a block diagram of an example of a system 100 for performing an authority-based training process for a LLM 128 according to some aspects of the present disclosure. The system 100 includes a server system 108 formed from any number and combination of computing devices, such as servers, desktop computers, etc. The server system 108 can be in communication with a client device 102 of a user 104 via one or more networks 106, such as a local area network or the Internet.

The server system 108 can execute a training process to train the LLM 128, before it begins receiving input queries from the user 104. To perform the training process, the server system 108 can begin by obtaining a training dataset 112. The training dataset 112 can include any number of samples 114, which can be collected from one or more sources. The samples 114 can be textual data, examples of which may include books, articles, blog posts, social media posts, source code, newspapers, and chat logs. There may be hundreds of thousands, if not millions, of samples in the training dataset 112.

The training dataset 112 may encompass multiple topics 134. For example, the samples 114 in the training dataset 112 may describe hundreds or thousands of topics 134, which may span different industries - e.g., finance, tech, medicine, government, etc. To determine which topics 134 are encompassed by the training dataset 112, the server system 108 can execute a topic model 136. A topic model 136 is a type of statistical model that can discover topics that occur in a text. There are several algorithms and techniques used to perform topic modeling, such as Latent Semantic Analysis (LSA), Latent Dirichlet Analysis (LDA), Gibbs Sampling for Dirichlet Multinomial Mixtures (HSDMM), Neural Topic Model (NTM), Non-Negative Matrix Factorization (NMF), etc. The topic model 136 may implement any such algorithm or technique to identify topics in the samples 114.

After obtaining the training dataset 112, the server system 108 can execute a metrics module 140 to compute multiple sets of data quality metrics 116 for each sample 114 in the training dataset 112. The sets of data quality metrics 116 for a single sample 114 can correspond to the different topics 134. For example, if there are N topics 134, the metrics module 140 can generate *N* sets of data quality metrics 116 for a single sample 114, with each set of data quality metrics corresponding to a single topic. A set of data quality metrics 116 for a sample 114 can indicate the "quality" of the sample 114 with respect to an individual topic. The "quality" of a sample 114 can be the sample's trustworthiness (e.g., accuracy and/or reliability) with respect to a given topic.

Each set of data quality metrics 116 can include a single data quality metric or multiple data quality metrics. Examples of the data quality metrics can include a reference count metric indicating the number of citations, re-posts, links, or other external references to the sample; a maturity metric indicating how old the sample is; a credential metric indicating the author's credentials (e.g., one or more degrees in a particular field of study); a peer review status metric indicating whether the sample was peer reviewed by industry professionals; and a sentiment metric indicating the sentiment of others (e.g., the number of likes or dislikes) about the sample. A higher reference count may mean that the sample is more popular, and potentially more trustworthy, than a lower reference count. A higher maturity metric may mean that the sample is older and potentially more outdated than a lower maturity metric. A higher credential metric may mean that the author of the sample has more credentials (e.g., university degrees or accolades in a field of study relevant to the sample) than a lower credential metric. A higher sentiment metric may mean that the sample is more popular than a lower sentiment metric. And so on.

Some or all of the data quality metrics for a given sample 114 may be derived from metadata associated with the sample 114. For example, if the sample 114 is an academic paper published in a journal available on a website, the website normally also contains data indicating the reference count, the author's biography/credentials, the publication date, and whether the journal is peer reviewed. Such information can be scraped from the website and used to compute a set of data quality metrics 116 for the sample 114. In this context, a higher reference count and/or a more accomplished author may suggest that the sample 114 is more trustworthy than a lower reference count and/or a less accomplished author. As another example, if the sample 114 is a post on X® (formerly Twitter®), the post's metadata normally also indicates the author, publication data, number of re-posts (e.g., re-tweets), etc., which can be scraped and used to compute a set of data quality metrics 116 for the sample 114. In this context, a higher reference count may suggest that the sample 114 is more popular, but not necessarily more trustworthy, than a lower reference count.

Next, the server system 108 can execute a scoring module 118 to generate sets of authority scores 120 for the samples 114. The sets of authority scores 120 can be generated based on the sets of data quality metrics 116 for the samples 114. In particular, a respective set of authority scores 120 can be generated for each individual sample 114 based on that sample's sets of data quality metrics 116. Each individual authority score for a given sample 114 can correspond to one of the topics 134 and can be generated based on the corresponding set of data quality metrics 116 for that topic. For example, if there are 1000 topics in the training dataset 112, the scoring module 118 can generate 1000 authority scores for a single sample, where each authority score corresponds to a single topic. The authority score for a given topic indicates the sample's authority level with respect to that single topic. For example, if the sample 114 is an academic paper about microcontrollers for robots, the scoring module 118 may compute two authority scores 120 for the sample - one authority score with respect to the topic of robotics and another authority score with respect to the topic of bird flu, both of which may be encompassed by the training dataset 112. As may be expected, the sample 114 may have a very high authority score with respect to the topic of robotics, and a very low authority score with respect to the topic of bird flu. The authority scores 120 for a given sample 114 can be stored in a vector, where each element in the vector corresponds to one of the topics 134.

To determine the authority score 120 for a given sample 114 in relation to a given topic, the scoring module 118 may execute one or more scoring algorithms. One example of such an algorithm can be the following weighted summation:

Authority Score(T) = x*(Reference Count) + y*(Author Credential Level) + z*(Popularity) where T is the topic; x, y, and z are weights; and "reference count," "author credential level," and "popularity" are data quality metrics. Some data quality metrics may be weighted higher than others in the weighted summation. For example, the reference count and author credentials may be more important in determining the sample's trustworthiness, and may thus weighted higher, than the popularity of the sample.

In some examples, the authority scores 120 may be normalized to a particular range of values (e.g., between 0 and 1) as part of the scoring algorithm itself. Alternatively, the authority scores 120 may be separately normalized to a particular range of values after they are computed by the scoring algorithm. Either way, the authority scores 120 can end up normalized for use during the training phase.

The server system 108 can next execute a training module 122 to train the LLM 128 based on the authority scores 120. For example, the authority scores 120 can be used to weight the samples 114 during the training process with respect to the different topics 134. For each topic, higher scoring samples should have a greater influence on the model's learning than lower scoring samples. This can be implemented by adjusting the loss function 124 used to train the LLM 128 to give more importance to high-authority samples. For example, the loss function 124 can include a set of weights 126, which may be dynamically adjusted during the training process to correspond to the set of authority scores 120 for the current sample being learned. One example of this is shown by the following equation:

$$\text{Weighted Loss} = \sum_i w_i \cdot Loss(y_i, \hat{y}_i)$$

where $i$ is the current sample being learned, $w_i$ is the set of weights 126 corresponding to the set of authority scores 120 for the $i^{th}$ sample, and $y_i$ is actual value for the $i^{th}$ sample, and $\hat{y}_i$ is the predicted value for the $i^{th}$ sample. As noted earlier, the set of authority scores 120 can be stored in a vector, which can be used as the set of weights 126. Each element in the vector, and thus each weight 126, corresponds to one of the topics. That way, the sample's authority score for each topic is used to weight the sample's importance for that topic in the loss function 124.

Once trained, the LLM 128 can be used to respond to queries from the user 104. For example, the user 104 may input a query 132 to the client device 102, which can transmit the query 132 to the server system 108. In response to receiving the query 132, the server system 108 can generate an input prompt 138 that includes the query 132. In some examples, the input prompt 138 may be the query 132 by itself or may include the query 132 along with additional information. The server system 108 can then provide the input prompt 138 to the LLM 128, which can generate an output 130 based on the input prompt 138. For instance, if the query 132 includes a question, the output 130 may be an answer to the question. The server system 108 can then provide the output 130 to the user 104, for example by transmitting the output 130 to the client device 102 via the network 106. Because of the above training process, the output 130 can be more accurate than is achieved using conventional training processes. This is because higher-authority training data was emphasized while training the LLM 128 with respect to the topic of the query 132.

To further improve the accuracy of the output 130, in some examples the server system 108 may perform a pre-processing operation on the query 132, before the query 132 is provided to the LLM 128. For example, the server system 108 may execute the topic model 136 to identify one or more topics associated with the query 132. The server system 108 can then configure the input prompt 138 to include at least some of the query 132 and an identifier for each topic. In some examples, the identifier may be the topic itself or a keyword or phrase indicative of the topic. For example, if the topic is solar power, the identifier may be the phrase "solar power" itself, the term "solar" without the term "power," the term "power" without the term "solar," or something else. Multiple identifiers associated with the topic may also be included in the input prompt 138. For instance, if the topic is "solar power," the input prompt 138 may include the following: {"solar power," "solar," "power," "renewable energy," "clean energy"}. These topic identifiers can serve as additional contextual information, which the LLM 128 can use to better process the query 132 and provide a more relevant output 130. For example, these topic identifiers can help trigger the most relevant parts (e.g., layers, nodes, and/or connections) of the LLM's internal architecture, or cause those parts to be weighted more highly, so that the output 130 is more accurate than without this process.

In some examples, the above training process can be repeated one or more times to improve the accuracy of the LLM 128. For example, the server system 108 can detect one or more events. Examples of such events can include the passage of a predefined time period, a request from an administrator, or the inclusion of additional samples 114 in the training dataset 112. In response to detecting such an event, the server system 108 may repeat at least some of the training process. For example, if a new sample was added to the training dataset 112, the server system 108 may generate sets of data quality metrics for the new sample, generate a set of authority scores for the new sample based on the sets of data quality metrics, and then retrain the LLM 128 using the set of authority scores for the new sample (e.g., in addition to the existing sets of authority scores for the old samples). As another example, if a predefined time period such as a week has passed, the server system 108 may generate new sets of data quality metrics for the samples 114, generate a new set of authority scores for the samples 114 based on the new sets of data quality metrics, and then retrain the LLM 128 using the new set of authority scores for the samples 114. The passage of the predefined time period may cause at least one data quality metric for a sample to change (e.g., there may be an increase in the reference count metric), which in turn may cause at least one authority score 120 for that sample to change, which in turn can affect how that sample is used in the training process.

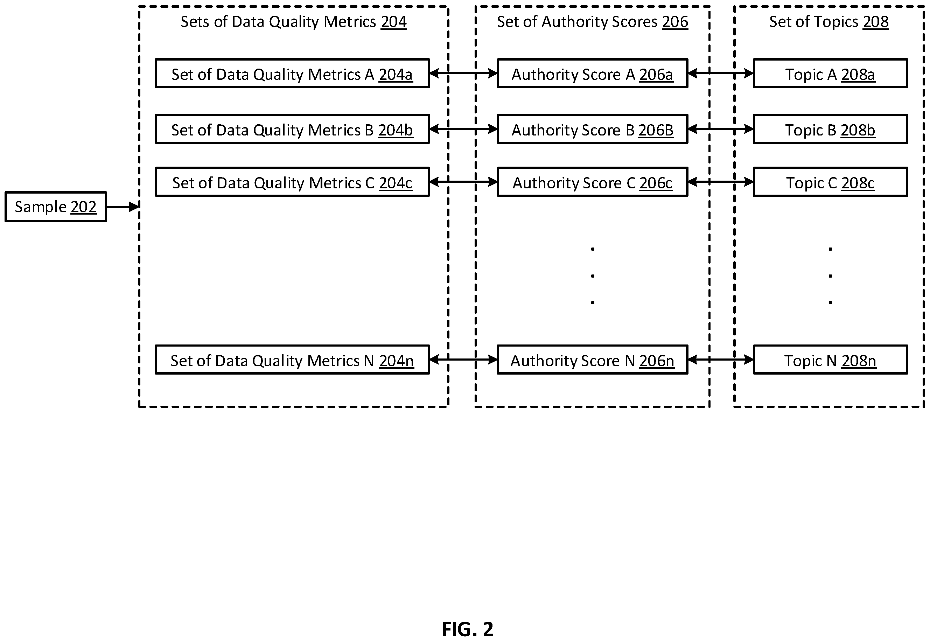

Turning now to FIG. 2, shown is an example of sets of data quality metrics 204 and a set of authority scores 206 for a sample 202 according to some aspects of the present disclosure. As described above, for a single sample 202, the system can generate multiple sets of data quality metrics 204. Each set of data quality metrics 204an can include any number and combination of data quality metrics and can correspond to a single topic. In this example, the set of data quality metrics 204a corresponds to topic 208a. The system can generate as many sets of data quality metrics 204a-n as there are topics 208a-n in the training dataset.

Based on the sets of data quality metrics 204, the system can generate a set of authority scores 206. The system can generate as many authority scores 206a-n as there are topics 208a-n in the training dataset. Each of the authority scores 206a-n can correspond to one of the topics 208a-n and indicate the authority level of the sample 202 with respect to the corresponding topic. For example, the authority score 206a can be generated based on the set of data quality metrics 204a and indicate the authority level of the sample 202 with respect to the topic 208a. The authority score 206b can be generated based on the set of data quality metrics 204b and indicate the authority level of the sample 202 with respect to the topic 208b. The authority score 206c can be generated based on the set of data quality metrics 204c and indicate the authority level of the sample 202 with respect to the topic 208c. And so on. The set of authority scores 206 can be stored in a vector or another data structure, where each element in the data structure can correspond to the same topic as the stored authority score.

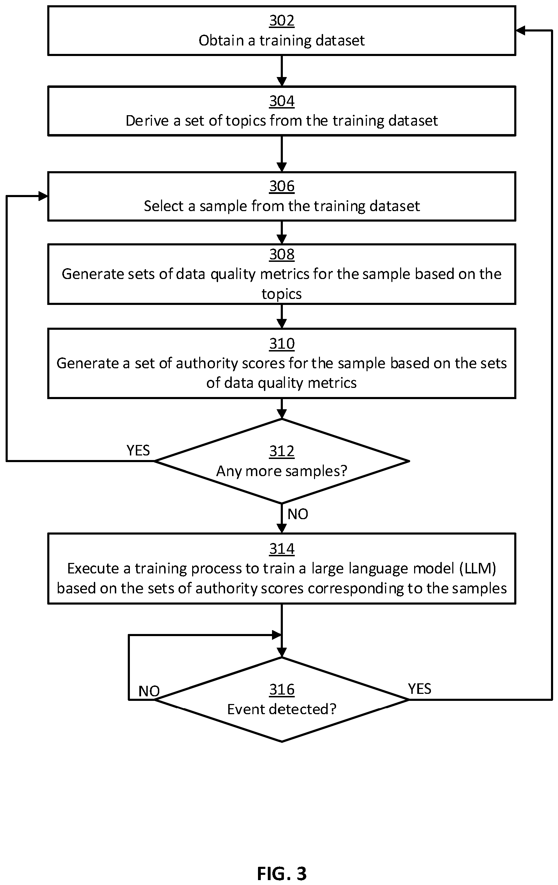

Turning now to FIG. 3, shown is a flowchart of an example of an authority-based training process for a large language model according to some aspects of the present disclosure. Other examples may include more operations, fewer operations, different operations, or a different sequence of operations than is shown in FIG. 3. The operations of FIG. 3 are described below with reference to the components of FIG. 1 described above.

In block 302, a computer system (e.g., server system 108) obtains a training dataset 112. The computer system may retrieve the training dataset from a database or another location.

In block 304, the computer system derives a set of topics from the training dataset 112. For example, the computer system can execute a topic model 136 on the training dataset 112 to identify a set of topics 134 described in the training dataset 112.

In block 306, the computer system selects a sample 114 from the training dataset 112. The computer system can randomly select the sample 114 or select samples in a predefined order, such as a sequential order.

In block 308, the computer system generates sets of data quality metrics 116 for the sample 114. For example, the computer system can execute a metrics module 140 configured to collect relevant information about each sample from one or more sources and then process that information to compute the sets of data quality metrics 116. The data quality metrics can each be expressed as a numerical value, letter grade, or other value. Each data quality metric may have a value that falls within a predefined range of values. Each set of data quality metrics 116 can correspond to a single topic and can provide important clues about the trustworthiness of the sample 114 with respect to that topic.

In block 310, the computer system generates a set of authenticity scores 120 for the sample 114 based on the sets of data quality metrics 116. For example, the computer system can execute a scoring module 118 configured to generate the set of authority scores 120 based on the sets of data quality metrics 116. Each authority score in the set 120 can correspond to one of the topics 134.

In block 312, the computer system can determine whether there are any more samples to evaluate in the training dataset 112. If so, the process can return to block 306 and another sample can be evaluated. Otherwise, the process can continue to block 314.

In block 314, the computer system executes a training process to train a LLM 128 based on the sets of authority scores 120 corresponding to the samples 114. This may involve configuring a loss function 124, used to train the LLM 128, with the sets of authority scores 120.

In block 316, the computer system determines whether a predefined event is detected. If not, the computer system can continue to wait for the predefined event to occur. Otherwise, the process may return to an earlier block, such as block 302 or 306, and repeat. This may allow the LLM 128 to be repeatedly updated over time, which can improve the performance of the LLM 128.

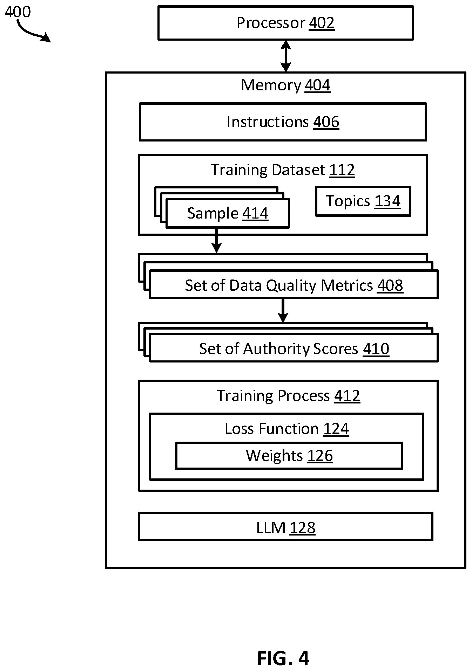

Turning now to FIG. 4, shown is a block diagram of an example of a system 400 for performing an authority-based training process for a large language model 128 according to some aspects of the present disclosure. As shown, the system 400 can include a processor 402 communicatively coupled to a memory 404 by a bus. The processor 402 can include one processing device or multiple processing devices. Non-limiting examples of the processor 402 include a Field-Programmable Gate Array (FPGA), an application-specific integrated circuit (ASIC), a microprocessor, or any combination of these. The processor 402 can execute instructions 406 stored in the memory 404 to perform operations, such as any of the operations described herein with respect to the server system 108. In some examples, the instructions 406 can include processor-specific instructions generated by a compiler or an interpreter from code written in any suitable computer-programming language, such as C, C++, C#, Python, or Java.

The memory 404 can include one memory device or multiple memory devices. The memory 404 can be volatile or non-volatile, such that the memory 404 retains stored information when powered off. Non-limiting examples of the memory 404 include electrically erasable and programmable read-only memory (EEPROM), flash memory, or any other type of non-volatile memory. At least some of the memory device can include a non-transitory computer-readable medium from which the processor 402 can read the instructions 406. A computer-readable medium can include electronic, optical, magnetic, or other storage devices capable of providing the processor 402 with computer-readable instructions or other program code. Non-limiting examples of a computer-readable medium can include magnetic disks, memory chips, ROM, random-access memory (RAM), an ASIC, a configured processor, optical storage, or any other medium from which a computer processor can read the instructions 406.

In some examples, the processor 402 can execute the instructions 406 to perform operations. For example, the processor 402 can, for each sample 414 in a training dataset 112 for training a LLM 128, generate corresponding sets of data quality metrics 408. The training dataset 112 can encompass a plurality of topics 134. For each sample 414 in the training dataset 112, the processor 402 can generate a corresponding set of authority scores 410 based on the corresponding sets of data quality metrics 408 for the sample 414. Each authority score in the corresponding set of authority scores 410 can indicate a respective authority level of the sample 414 in relation to a particular topic of the plurality of topics 134. The processor can then execute a training process 412 in which the LLM 128 is trained using a loss function 124 that includes a set of weights 126. The training process 412 can involve dynamically adjusting the set of weights 126 based on the corresponding set of authority scores 410 for each sample 414 in the training dataset 112. For example, the training process 412 can involve dynamically adjusting the set of weights 126 to the corresponding set of authority scores 410 for each sample 414 in the training dataset 112, during the learning phase for that sample 414.

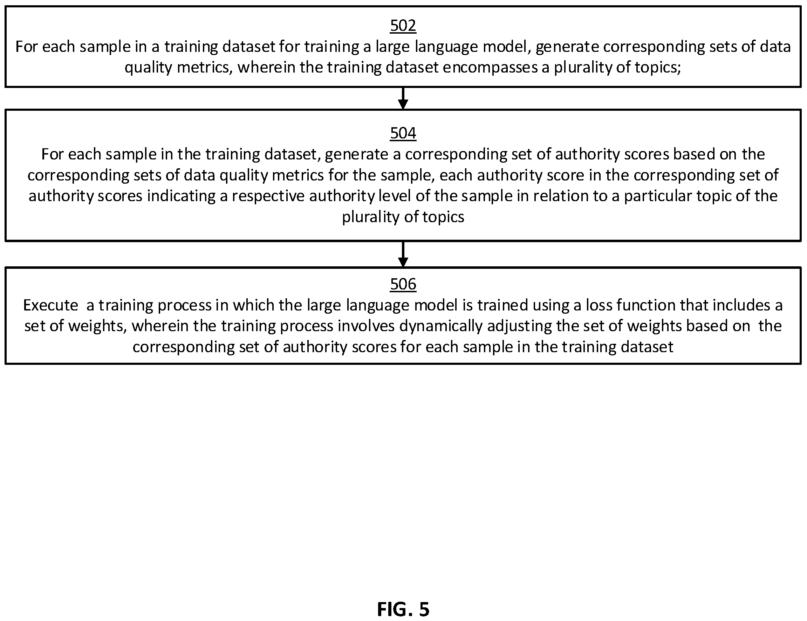

Turning now to FIG. 5, shown is a flowchart of an example of an authority-based training process for a large language model according to some aspects of the present disclosure. Other examples may include more operations, fewer operations, different operations, or a different sequence of operations than is shown in FIG. 3. The operations of FIG. 5 are described below with reference to the components of FIG. 4 described above.

In block 502, the processor 402 generates corresponding sets of data quality metrics 408 for each sample 414 in a training dataset 112 for training a LLM 128. The training dataset 112 can encompass a plurality of topics 134.

In block 504, the processor 402 generates a corresponding set of authority scores 410 for each sample 414 in the training dataset 112 based on the corresponding sets of data quality metrics 408 for the sample 414. Each authority score in the corresponding set of authority scores 410 can indicate a respective authority level of the sample 414 in relation to a particular topic of the plurality of topics 134.

In block 506, the processor 402 executes a training process 412 in which the LLM 128 is trained using a loss function 124 that includes a set of weights 126. The training process 412 can involve dynamically adjusting the set of weights 126 based on the corresponding set of authority scores 410 for each sample 414 in the training dataset 112.

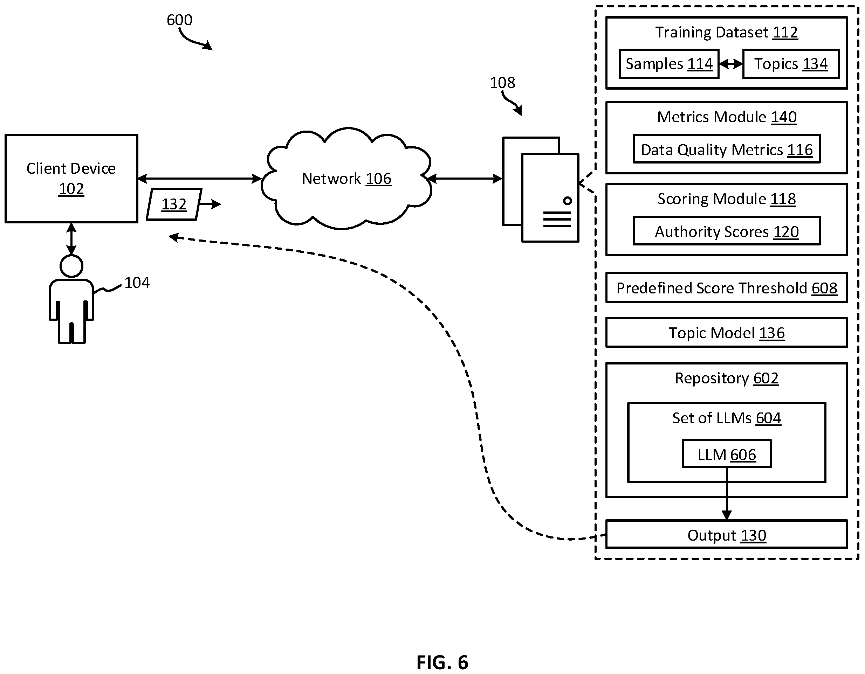

Turning now to FIG. 6, shown is a block diagram of another example of a system 600 for performing an authority-based training process for a large language model according to some aspects of the present disclosure. The system 600 can include the server system 108 and client device 102 described above. The server system 108 can also compute sets of data quality metrics 116 and a set of authority scores 120 for each sample 114 in a training dataset 112 using the techniques described above.

Where this example differs from the earlier examples is that there can be multiple LLMs 604, which may be stored in a repository 602. Each LLM 604 can be configured to handle a different topic or subset of topics than the other LLMs 604. For example, the LLMs 604 can each be trained on only a portion of the training dataset 112 that is authoritative with respect to a particular topic or subset of the topics 134 encompassed by the training dataset 112. That way, the LLM 604 gets good at handling queries related to that particular topic or subset of topics. This can result in a group of specialized LLMs 604, where each of the specialized LLMs 604 is configured to handle a particular topic or subset of the topics 134, rather than a single LLM (e.g., LLM 128) that is designed to handle all of the topics 134.

To implement the above, each of the LLMs 604 may be trained on only the samples in the training dataset 112 that are authoritative with respect to a particular topic or subset of topics. To determine which samples of the training dataset 112 are authoritative with respect to a particular topic or subset of topics, the samples' authority scores 120 can be compared to a predefined score threshold 608.

If a sample 114 has an authority score 120 in relation to a particular topic that meets or exceeds the predefined score threshold 608, the sample 114 can be used to train the LLM 604 that is specific to that topic. On the other hand, if the sample's authority score 120 in relation to a particular topic is below the predefined score threshold 608, the sample 114 may not be used to train the LLM 604 that is specific to that topic. In this way, some samples 114 may be used to train some of the LLMs 604 but not others. The samples 114 used to train a given LLM 604 are chosen because they are authoritative with respect to that LLM's topic, which results in more accurate outputs from the LLM.

After the LLMs 604 have been trained using the above process, the user 104 may submit a query 132. In response to receiving the query 132, the server system 108 can execute the topic model 136 to determine a topic of the query 132. The server system 108 can then select an LLM 606, from among the set of LLMs 604 in the repository 602, that most closely matches the topic of the query 132. The query 132 can then be fed as input to the LLM 606, which can generate an output 130 based on the query 132. Through this process, the query 132 can be responded to by the most appropriate LLM 606, which can result in a better response than if a single LLM is used to handle all queries about all topics.

In some examples, the server system 108 can retrain one or more of the LLMs 604 in response to detecting one or more events, as described above. For example, the server system 108 may collect one or more additional training samples, determine that they are authoritative with respect to a particular topic (e.g., they have authority scores 120 that meet or exceed the predefined score threshold 608 for that particular topic), determine the LLM 606 associated with that particular topic, and retrain that LLM 606 using the one or more additional training samples. Through this process, the LLMs 604 may be continually updated over time.

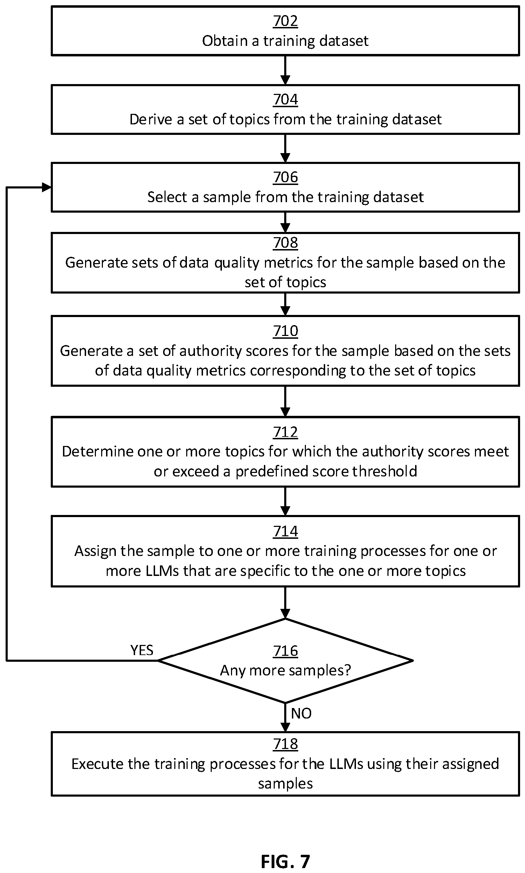

Turning now to FIG. 7, shown is a flowchart of another example of an authority-based training process for a large language model according to some aspects of the present disclosure. Other examples may include more operations, fewer operations, different operations, or a different sequence of operations than is shown in FIG. 7. The operations of FIG. 7 are described below with reference to the components of FIG. 6 described above.

Blocks 702-710 can be similar to blocks 302-310 of FIG. 3 and may be implemented for a sample 114 by a computer system, as described with respect to FIG. 3.

In block 712, the computer system can determine one or more topics for which the authority scores 120 meet or exceed a predefined score threshold 608, which may be set by an administrator. This can be achieved by comparing each of the authority scores 120 for the sample 114 to the predefined score threshold 608.

In block 714, the computer system assigns the sample 114 to one or more training processes for one or more LLMs 604 that are specific to the one or more topics. For example, if the sample 114 has two authority scores that meet or exceed a predefined score threshold 608, and those two authority scores correspond to two topics, then the sample 114 can be assigned to two training processes for two of the LLMs 604 that are specific to those two topics. For instance, the sample 114 may be included in a first group of training data for a first LLM, and the sample 114 may be included in a second group of training data for a second LLM.

An LLM 604 can be considered "specific to" a topic if it is primarily configured (e.g., designed or trained) to handle queries about that topic. For instance, an LLM 604 can be domain-specific or specialized for a given topic if it has been trained, fine-tuned, and/or otherwise configured to focus on and excel at answering questions and providing information related to that particular topic.

In block 716, the computer system can determine whether there are any more samples 114 to evaluate. This step can be similar to block 312 of FIG. 3. If there are more samples 114 to evaluate, the process can return to block 706 and iterate for another sample. If there are no more samples 114 to evaluate, the process can proceed to block 718.

In block 718, the computer system executes the training processes for the LLMs 604 using their assigned samples. For example, if a first group of samples was assigned to a first LLM and a second group of samples was assigned to a second LLM, then the first group of samples (and not the second group of samples) can be used to train the first LLM and the second group of samples (and not the first group of samples) can be used to train the second LLM.

As noted above, block 316 may also be implemented in some examples such that the computer system can detect one or more events and responsively repeat some or all of the process shown in FIG. 7, which can allow the LLMs 604 to be iteratively updated over time.

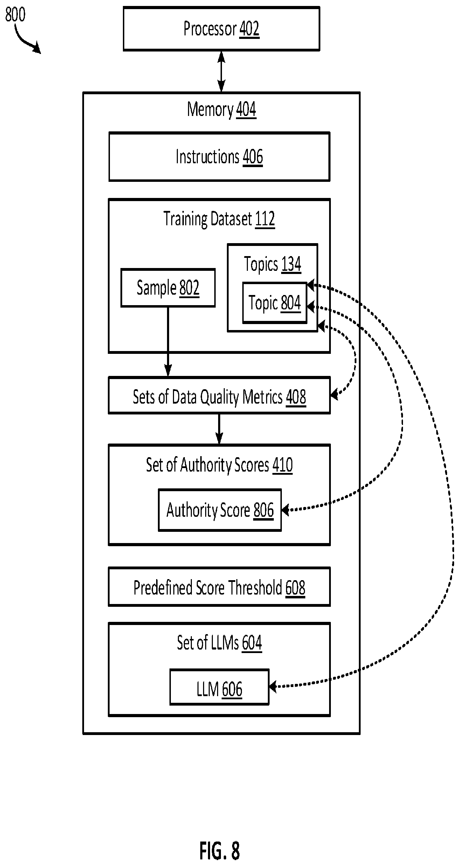

Turning now to FIG. 8, shown is a block diagram of another example of a system 800 for performing an authority-based training process for a large language model according to some aspects of the present disclosure. As shown, the system 800 can include a processor 402 communicatively coupled to a memory 404 that stores instructions 406, as described above with respect to FIG. 4.

In some examples, the processor 402 can execute the instructions 406 to perform operations. For example, the processor 402 can generate sets of data quality metrics 408 for a sample 802 in a training dataset 112. The training dataset 112 can encompass a plurality of topics 134. The sets of data quality metrics 408 can correspond to the plurality of topics 134, for example, such that each set of data quality metrics 408 corresponds to a single topic of the plurality of topics 134. The processor 402 can also generate a set of authority scores 410 based on the sets of data quality metrics 408 for the sample 802. Each authority score in the set of authority scores 410 can indicate a respective authority level of the sample 802 in relation to a respective topic of the plurality of topics 134. The processor 402 can then determine a topic 804 of the plurality of topics 134 for which a corresponding authority score 806 in the set of authority scores 120 meets or exceeds a predefined score threshold 608. The relationship between the topic 804 and the authority score 806 is represented by a dashed arrow in FIG. 8. Based on determining the topic 804, the processor 402 can select a large language model 606 that is specific to the topic 804 from among a plurality of large language models 604. The relationship between the large language model 606 and the topic 804 is also represented by a dashed arrow in FIG. 8. The plurality of large language models 604 can be specific to the plurality of topics 134, such that each large language model of the plurality of large language models 604 is specific to a respective topic of the plurality of topics 134. The processor 402 can then execute a training process in which the large language model 606 is trained using the sample 802. This process may be repeated for some or all of the samples in the training dataset 112.

Some aspects of the present disclosure can be implemented according to one or more of the following examples. As used below, any reference to a series of examples is to be understood as a reference to each of those examples disjunctively (e.g., "Examples 1-4" is to be understood as "Examples 1, 2, 3, or 4").

Example #1: A system comprising: one or more processors; and one or more memories storing program code that is executable by the one or more processors for causing the one or more processors to perform operations. The operations can include, for each sample in a training dataset for training a large language model, generating corresponding sets of data quality metrics, wherein the training dataset encompasses a plurality of topics. The operations can include, for each sample in the training dataset, generating a corresponding set of authority scores based on the corresponding sets of data quality metrics for the sample, each authority score in the corresponding set of authority scores indicating a respective authority level of the sample in relation to a particular topic of the plurality of topics. The operations can include executing a training process in which the large language model is trained using a loss function that includes a set of weights, wherein the training process involves dynamically adjusting the set of weights based on the corresponding set of authority scores for each sample in the training dataset.

Example #2: The system of Example #1, wherein the operation of dynamically adjusting the set of weights causes more importance to be given to higher authority data in the training dataset with respect to each topic of the plurality of topics than to lower authority data in the training dataset with respect to each topic of the plurality of topics.

Example #3: The system of any of Examples #1-2, wherein the corresponding set of authority scores, for each sample in the training dataset, includes normalized scores generated using a predefined normalization technique.

Example #4: The system of any of Examples #1-3, wherein each set of data quality metrics in the corresponding sets of data quality metrics for a given sample corresponds to a respective topic of the plurality of topics and includes a reference count metric, a maturity metric, and a sentiment metric.

Example #5: The system of any of Examples #1-4, wherein the operations further comprise, after the training process is complete: executing a topic model on a query from a user to automatically determine one or more topics present in the query; generating an input prompt based on the query and the one or more topics; providing the input prompt as input to the large language model, the large language model being configured to generate an output based on the input prompt; and providing the output to the user as a response to the query.

Example #6: The system of any of Examples #1-5, wherein the operations further comprise, after the training process is complete: detecting an event; and in response to detecting the event: for each sample of the training dataset, updating the corresponding set of authority scores to thereby generate an updated set of authority scores for the sample;

and retraining the large language model based on the updated sets of authority scores for the samples in the training dataset.

Example #7: The system of Example #6, wherein the operations further comprise: for each sample of the training dataset: generating updated sets of data quality metrics corresponding to the plurality of topics; and updating the corresponding set of authority scores based on the updated sets of data quality metrics to thereby generate the updated set of authority scores for the sample.

Example #8: The system of any of Examples #1-7, wherein the operations further comprise: automatically deriving the plurality of topics from the training dataset by executing a topic model on the training dataset; and after automatically deriving the plurality of topics from the training dataset, generating the corresponding set of authority scores for each sample in the training dataset based on the plurality of topics.

Example #9: A computer-implemented method comprising: for each sample in a training dataset for training a large language model, generating corresponding sets of data quality metrics, wherein the training dataset encompasses a plurality of topics; for each sample in the training dataset, generating a corresponding set of authority scores based on the corresponding sets of data quality metrics for the sample, each authority score in the corresponding set of authority scores indicating a respective authority level of the sample in relation to a particular topic of the plurality of topics; and executing a training process in which the large language model is trained using a loss function that includes a set of weights, wherein the training process involves dynamically adjusting the set of weights based on the corresponding set of authority scores for each sample in the training dataset.

Example #10: The method of Example #9, wherein the operation of dynamically adjusting the set of weights causes more importance to be given to higher authority data in the training dataset with respect to each topic of the plurality of topics than to lower authority data in the training dataset with respect to each topic of the plurality of topics.

Example #11: The method of any of Examples #9-10, wherein the corresponding set of authority scores, for each sample in the training dataset, includes normalized scores generated using a predefined normalization technique.

Example #12: The method of any of Examples #9-11, wherein each set of data quality metrics in the corresponding sets of data quality metrics for a given sample corresponds to a respective topic of the plurality of topics and includes a reference count metric.

Example #13: The method of any of Examples #9-12, further comprising, after the training process is complete: executing a topic model on a query from a user to automatically determine one or more topics present in the query; generating an input prompt based on the query and the one or more topics; providing the input prompt as input to the large language model, the large language model being configured to generate an output based on the input prompt; and providing the output to the user as a response to the query.

Example #14: The method of any of Examples #9-13, further comprising, after the training process is complete: detecting an event; and in response to detecting the event: for each sample of the training dataset, updating the corresponding set of authority scores to thereby generate an updated set of authority scores for the sample; and retraining the large language model based on the updated sets of authority scores for the samples in the training dataset.

Example #15: The method of any of Examples #9-14, further comprising: for each sample of the training dataset, generating an additional data quality metric; for each sample of the training dataset, updating the corresponding set of authority scores based on the additional data quality metric to thereby generate an updated set of authority scores for the sample; and retraining the large language model based on the updated sets of authority scores for the samples in the training dataset.

Example #16: The method of any of Examples #9-15, further comprising: automatically deriving the plurality of topics from the training dataset by executing a topic model on the training dataset; and after automatically deriving the plurality of topics from the training dataset, generating the corresponding set of authority scores for each sample in the training dataset based on the plurality of topics.

Example #17: A non-transitory computer-readable medium comprising program code that is executable by one or more processors for causing the one or more processors to perform operations including: for each sample in a training dataset for training a large language model, generating corresponding sets of data quality metrics, wherein the training dataset encompasses a plurality of topics; for each sample in the training dataset, generating a corresponding set of authority scores based on the corresponding sets of data quality metrics for the sample, each authority score in the corresponding set of authority scores indicating a respective authority level of the sample in relation to a particular topic of the plurality of topics; and executing a training process in which the large language model is trained using a loss function that includes a set of weights, wherein the training process involves dynamically adjusting the set of weights based on the corresponding set of authority scores for each sample in the training dataset.

Example #18: The non-transitory computer-readable medium of Example #17, wherein the operation of dynamically adjusting the set of weights causes more importance to be given to higher authority data in the training dataset with respect to each topic of the plurality of topics than to lower authority data in the training dataset with respect to each topic of the plurality of topics.

Example #19: The non-transitory computer-readable medium of any of Examples #17-18, wherein the operations further comprise, after the training process is complete: detecting an event; and in response to detecting the event: for each sample of the training dataset, updating the corresponding set of authority scores to thereby generate an updated set of authority scores for the sample; and retraining the large language model based on the updated sets of authority scores for the samples in the training dataset.

Example #20: The non-transitory computer-readable medium of any of Examples #17-19, wherein the operations further comprise: automatically deriving the plurality of topics from the training dataset by executing a topic model on the training dataset; and after automatically deriving the plurality of topics from the training dataset, generating the corresponding set of authority scores for each sample in the training dataset based on the plurality of topics.

Example #21: A system comprising: one or more processors; and one or more memories storing program code that is executable by the one or more processors for causing the one or more processors to perform operations. The operations can include generating sets of data quality metrics for a sample in a training dataset, wherein the sets of data quality metrics correspond to a plurality of topics encompassed by the training dataset. The operations can include generating a set of authority scores based on the sets of data quality metrics for the sample, each authority score in the set of authority scores indicating a respective authority level of the sample in relation to a respective topic of the plurality of topics. The operations can include determining a topic of the plurality of topics for which a corresponding authority score in the set of authority scores meets or exceeds a predefined threshold. The operations can include based on determining the topic, selecting a large language model that is specific to the topic from among a plurality of large language models, wherein the plurality of large language models are specific to the plurality of topics such that each large language model of the plurality of large language models is specific to a respective topic of the plurality of topics. The operations can include executing a training process in which the large language model is trained using the sample.

Example #22: The system of Example #21, wherein the operations are iterated for each sample in the training dataset.

Example #23: The system of any of Examples #21-22, wherein the set of authority scores includes normalized scores generated using a predefined normalization technique.

Example #24: The system of any of Examples #21-23, wherein each of the sets of data quality metrics for the sample includes a reference count metric, a maturity metric, and a sentiment metric.

Example #25: The system of any of Examples #21-24, wherein the operations further comprise, after the training process is complete: executing a topic model on a query from a user to automatically determine that the topic is present in the query; selecting the large language model, from among the plurality of large language models, for use in responding to the query based on the topic; providing the query as input to the large language model, the large language model being configured to generate an output based on the input prompt; and providing the output to the user as a response to the query.

Example #26: The system of any of Examples #21-25, wherein the operations further comprise, after the training process is complete: detecting an event; and in response to detecting the event: updating the set of authority scores for the sample to thereby generate an updated set of authority scores for the sample; and retraining the large language model based on the updated set of authority scores for the sample.

Example #27: The system of Example #26, wherein the operations further comprise: generating updated sets of data quality metrics for the sample; and updating the set of authority scores based on the updated sets of data quality metrics to thereby generate the updated set of authority scores for the sample.

Example #28: A computer-implemented method comprising: generating sets of data quality metrics for a sample in a training dataset, wherein the sets of data quality metrics correspond to a plurality of topics encompassed by the training dataset; generating a set of authority scores based on the sets of data quality metrics for the sample, each authority score in the set of authority scores indicating a respective authority level of the sample in relation to a respective topic of the plurality of topics; determining a topic of the plurality of topics for which a corresponding authority score in the set of authority scores meets or exceeds a predefined threshold; based on determining the topic, selecting a large language model that is specific to the topic from among a plurality of large language models, wherein the plurality of large language models are specific to the plurality of topics such that each large language model of the plurality of large language models is specific to a respective topic of the plurality of topics; and executing a training process in which the large language model is trained using the sample.

Example #29: The method of Example #28, wherein the method is iterated for each sample in the training dataset.

Example #30: The method of any of Examples #28-29, wherein the set of authority scores includes normalized scores generated using a predefined normalization technique.

Example #31: The method of any of Examples #28-30, wherein each of the sets of data quality metrics for the sample includes a reference count metric.

Example #32: The method of any of Examples #28-31, further comprising, after the training process is complete: executing a topic model on a query from a user to automatically determine that the topic is present in the query; selecting the large language model, from among the plurality of large language models, for use in responding to the query based on the topic; providing the query as input to the large language model, the large language model being configured to generate an output based on the input prompt; and providing the output to the user as a response to the query.

Example #33: The method of any of Examples #28-32, further comprising, after the training process is complete: detecting an event; and in response to detecting the event: updating the set of authority scores for the sample to thereby generate an updated set of authority scores for the sample; and retraining the large language model based on the updated set of authority scores for the sample.

Example #34: The method of any of Examples #28-33, further comprising: generating updated sets of data quality metrics for the sample; and updating the set of authority scores based on the updated sets of data quality metrics to thereby generate an updated set of authority scores for the sample.

Example #35: A non-transitory computer-readable medium comprising program code that is executable by one or more processors for causing the one or more processors to perform operations including: generating sets of data quality metrics for a sample in a training dataset, wherein the sets of data quality metrics correspond to a plurality of topics encompassed by the training dataset; generating a set of authority scores based on the set of data quality metrics for the sample, each authority score in the set of authority scores indicating a respective authority level of the sample in relation to a respective topic of the plurality of topics; determining a topic of the plurality of topics for which a corresponding authority score in the set of authority scores meets or exceeds a predefined threshold; based on determining the topic, selecting a large language model that is specific to the topic from among a plurality of large language models specific to the plurality of topics, each large language model of the plurality of large language models being specific to a respective topic of the plurality of topics; and executing a training process in which the large language model is trained using the sample.

Example #36: A system comprising: means for generating sets of data quality metrics for a sample in a training dataset, wherein the sets of data quality metrics correspond to a plurality of topics encompassed by the training dataset; means for generating a set of authority scores based on the sets of data quality metrics for the sample, each authority score in the set of authority scores indicating a respective authority level of the sample in relation to a respective topic of the plurality of topics; means for determining a topic of the plurality of topics for which a corresponding authority score in the set of authority scores meets or exceeds a predefined threshold; means for, based on determining the topic, selecting a large language model that is specific to the topic from among a plurality of large language models specific to the plurality of topics, each large language model of the plurality of large language models being specific to a respective topic of the plurality of topics; and means for executing a training process in which the large language model is trained using the sample.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A system comprising:

    one or more processors; and
    one or more memories storing program code that is executable by the one or more processors for causing the one or more processors to perform operations including:

        for each sample in a training dataset for training a large language model, generating corresponding sets of data quality metrics, wherein the training dataset encompasses a plurality of topics;
        for each sample in the training dataset, generating a corresponding set of authority scores based on the corresponding sets of data quality metrics for the sample, each authority score in the corresponding set of authority scores indicating a respective authority level of the sample in relation to a particular topic of the plurality of topics; and
        executing a training process in which the large language model is trained using a loss function that includes a set of weights, wherein the training process involves dynamically adjusting the set of weights based on the corresponding set of authority scores for each sample in the training dataset.

2. The system of claim 1, wherein the operation of dynamically adjusting the set of weights causes more importance to be given to higher authority data in the training dataset with respect to each topic of the plurality of topics than to lower authority data in the training dataset with respect to each topic of the plurality of topics.

3. The system of claim 1, wherein the corresponding set of authority scores, for each sample in the training dataset, includes normalized scores generated using a predefined normalization technique.

4. The system of claim 1, wherein each set of data quality metrics in the corresponding sets of data quality metrics for a given sample corresponds to a respective topic of the plurality of topics and includes one or more of: a reference count metric, a maturity metric, and a sentiment metric.

5. The system of claim 1, wherein the operations further comprise, after the training process is complete:

executing a topic model on a query from a user to automatically determine one or more topics present in the query; generating an input prompt based on the query and the one or more topics; providing the input prompt as input to the large language model, the large language model being configured to generate an output based on the input prompt; and providing the output to the user as a response to the query.

6. The system of claim 1, wherein the operations further comprise, after the training process is complete:

detecting an event; and in response to detecting the event:

for each sample of the training dataset, updating the corresponding set of authority scores to thereby generate an updated set of authority scores for the sample; and retraining the large language model based on the updated sets of authority scores for the samples in the training dataset.

7. The system of claim 6, wherein the operations further comprise, for each sample of the training dataset:

generating updated sets of data quality metrics corresponding to the plurality of topics; and updating the corresponding set of authority scores based on the updated sets of data quality metrics to thereby generate the updated set of authority scores for the sample.

8. The system of claim 1, wherein the operations further comprise:

automatically deriving the plurality of topics from the training dataset by executing a topic model on the training dataset; and after automatically deriving the plurality of topics from the training dataset, generating the corresponding set of authority scores for each sample in the training dataset based on the plurality of topics.

9. A computer-implemented method comprising:

for each sample in a training dataset for training a large language model, generating corresponding sets of data quality metrics, wherein the training dataset encompasses a plurality of topics; for each sample in the training dataset, generating a corresponding set of authority scores based on the corresponding sets of data quality metrics for the sample, each authority score in the corresponding set of authority scores indicating a respective authority level of the sample in relation to a particular topic of the plurality of topics; and executing a training process in which the large language model is trained using a loss function that includes a set of weights, wherein the training process involves dynamically adjusting the set of weights based on the corresponding set of authority scores for each sample in the training dataset.

10. The method of claim 9, wherein one or more of the following:

the operation of dynamically adjusting the set of weights causes more importance to be given to higher authority data in the training dataset with respect to each topic of the plurality of topics than to lower authority data in the training dataset with respect to each topic of the plurality of topics; the corresponding set of authority scores, for each sample in the training dataset, includes normalized scores generated using a predefined normalization technique; and each set of data quality metrics in the corresponding sets of data quality metrics for a given sample corresponds to a respective topic of the plurality of topics and includes one or more of: a reference count metric, a maturity metric, and a sentiment metric.

**11.** The method of claim 9, further comprising, after the training process is complete:

executing a topic model on a query from a user to automatically determine one or more topics present in the query;
generating an input prompt based on the query and the one or more topics;
providing the input prompt as input to the large language model, the large language model being configured to generate an output based on the input prompt; and
providing the output to the user as a response to the query.

**12.** The method of claim 9, further comprising, after the training process is complete:

detecting an event; and
in response to detecting the event:

for each sample of the training dataset, updating the corresponding set of authority scores to thereby generate an updated set of authority scores for the sample; and
retraining the large language model based on the updated sets of authority scores for the samples in the training dataset.

**13.** The method of claim 9, further comprising:

for each sample of the training dataset, generating an additional data quality metric;
for each sample of the training dataset, updating the corresponding set of authority scores based on the additional data quality metric to thereby generate an updated set of authority scores for the sample; and
retraining the large language model based on the updated sets of authority scores for the samples in the training dataset.

**14.** The method of claim 9, further comprising:

automatically deriving the plurality of topics from the training dataset by executing a topic model on the training dataset; and
after automatically deriving the plurality of topics from the training dataset, generating the corresponding set of authority scores for each sample in the training dataset based on the plurality of topics.

**15.** A non-transitory computer-readable medium comprising program code that is executable by one or more processors for causing the one or more processors to carry out the method of any of claims 9 to 14.

**FIG. 1**

| Sets of Data Quality Metrics 204 | Set of Authority Scores 206 | Set of Topics 208 |
|---|---|---|
| Set of Data Quality Metrics A 204a | Authority Score A 206a | Topic A 208a |
| Set of Data Quality Metrics B 204b | Authority Score B 206B | Topic B 208b |
| Set of Data Quality Metrics C 204c | Authority Score C 206c | Topic C 208c |
| Set of Data Quality Metrics N 204n | Authority Score N 206n | Topic N 208n |

Sample 202

FIG. 2

EP 4 722 943 A1

<table>
<tr><td>302<br>Obtain a training dataset</td></tr>
</table>

<table>
<tr><td>304<br>Derive a set of topics from the training dataset</td></tr>
</table>

<table>
<tr><td>306<br>Select a sample from the training dataset</td></tr>
</table>

<table>
<tr><td>308<br>Generate sets of data quality metrics for the sample based on the topics</td></tr>
</table>

<table>
<tr><td>310<br>Generate a set of authority scores for the sample based on the sets of data quality metrics</td></tr>
</table>

YES ← **312** Any more samples?

NO

<table>
<tr><td>314<br>Execute a training process to train a large language model (LLM) based on the sets of authority scores corresponding to the samples</td></tr>
</table>

NO ← **316** Event detected? → YES

**FIG. 3**

FIG. 4

**502**
For each sample in a training dataset for training a large language model, generate corresponding sets of data quality metrics, wherein the training dataset encompasses a plurality of topics;

↓

**504**
For each sample in the training dataset, generate a corresponding set of authority scores based on the corresponding sets of data quality metrics for the sample, each authority score in the corresponding set of authority scores indicating a respective authority level of the sample in relation to a particular topic of the plurality of topics

↓

**506**
Execute a training process in which the large language model is trained using a loss function that includes a set of weights, wherein the training process involves dynamically adjusting the set of weights based on the corresponding set of authority scores for each sample in the training dataset

**FIG. 5**

FIG. 6

600

Client Device 102

104

132

Network 106

108

Training Dataset 112
Samples 114 ↔ Topics 134

Metrics Module 140
Data Quality Metrics 116

Scoring Module 118
Authority Scores 120

Predefined Score Threshold 608

Topic Model 136

Repository 602
Set of LLMs 604
LLM 606

Output 130

```
┌─────────────────────────────────────────────────┐
│                      702                          │
│           Obtain a training dataset               │
└─────────────────────────────────────────────────┘
                        │
                        ▼
┌─────────────────────────────────────────────────┐
│                      704                          │
│    Derive a set of topics from the training       │
│                  dataset                          │
└─────────────────────────────────────────────────┘
                        │
                        ▼
┌─────────────────────────────────────────────────┐
│                      706                          │
│     Select a sample from the training dataset     │
└─────────────────────────────────────────────────┘
                        │
                        ▼
┌─────────────────────────────────────────────────┐
│                      708                          │
│  Generate sets of data quality metrics for the    │
│        sample based on the set of topics          │
└─────────────────────────────────────────────────┘
                        │
                        ▼
┌─────────────────────────────────────────────────┐
│                      710                          │
│  Generate a set of authority scores for the       │
│  sample based on the sets of data quality         │
│   metrics corresponding to the set of topics      │
└─────────────────────────────────────────────────┘
                        │
                        ▼
┌─────────────────────────────────────────────────┐
│                      712                          │
│  Determine one or more topics for which the       │
│  authority scores meet or exceed a predefined     │
│              score threshold                      │
└─────────────────────────────────────────────────┘
                        │
                        ▼
┌─────────────────────────────────────────────────┐
│                      714                          │
│  Assign the sample to one or more training        │
│  processes for one or more LLMs that are          │
│   specific to the one or more topics              │
└─────────────────────────────────────────────────┘
                        │
                        ▼
              ◇─────────────────◇
        YES   ◇      716         ◇
  ◄───────────◇  Any more        ◇
              ◇  samples?        ◇
              ◇─────────────────◇
                        │ NO
                        ▼
┌─────────────────────────────────────────────────┐
│                      718                          │
│  Execute the training processes for the LLMs      │
│        using their assigned samples               │
└─────────────────────────────────────────────────┘
```

**FIG. 7**

**FIG. 8**

Europäisches
Patentamt
European
Patent Office
Office européen
des brevets

# EUROPEAN SEARCH REPORT

**Application Number**

EP 24 21 9590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/182298 A1 (IQ CONSULTING COMPANY INC [US]) 6 September 2024 (2024-09-06) * paragraphs [0084], [0298] * ----- | 1-15 | INV. G06F16/3329 |

**TECHNICAL FIELDS SEARCHED (IPC)**

G06F

The present search report has been drawn up for all claims

| Place of search | Date of completion of the search | Examiner |
|---|---|---|
| The Hague | 25 April 2025 | Hackelbusch, Richard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 9590

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2025

| Patent document cited in search report | Publication date | Patent family member(s) | Publication date |
|---|---|---|---|
| WO 2024182298 A1 | 06-09-2024 | NONE | |

For more details about this annex : see Official Journal of the European Patent Office, No. 12/82